# EUROPÄISCHE PATENTANMELDUNG

(11) **EP 4 843 533 A1**
(43) Veröffentlichungstag der Anmeldung: **25.11.2026**
(21) Anmeldenummer: 25178629.9
(22) Anmeldetag: 23.05.2025
(51) Int. Cl.: A61C 13/00, A61C 13/267, B29C 64/112, B29C 64/118, B29C 64/393, B33Y 10/00, B33Y 30/00, B33Y 50/02, B33Y 80/00, B22F 10/22

(54) **VERFAHREN UND VORRICHTUNG ZUM HERSTELLEN EINER DENTALEN PROTHESE, COMPUTERIMPLEMENTIERTES VERFAHREN ZUM ERSTELLEN EINES SCHICHTAUFBAUS FÜR EINE DENTALE PROTHESE, VORRICHTUNG ZUR DATENVERARBEITUNG, COMPUTERPROGRAMM, UND COMPUTERLESBARES MEDIUM**

(71) Anmelder: Ivoclar Vivadent AG, 9494 Schaan (LI)
(72) Erfinder: JOHN, Hendrik, 9470 Buchs (CH)
(74) Vertreter: Maiwald GmbH

(57) **Zusammenfassung**

Es wird ein Verfahren zum Herstellen einer dentalen Prothese (12) beschrieben. Die Prothese (12) umfasst einen ersten Abschnitt (12a) zur Nachbildung von Zahnfleisch, einen zweiten Abschnitt (12b) zur Nachbildung mindestens eines Zahns sowie einen dritten Abschnitt (12c) zur Befestigung der Prothese (12) im Mund und/oder zur Verstärkung der Prothese. Dabei werden der erste Abschnitt (12a) und/oder der zweite Abschnitt (12b) mittels eines Material Jetting Verfahrens schichtweise hergestellt. Der dritte Abschnitt (12c) wird mittels eines Schmelzschichtverfahrens schichtweise hergestellt. Außerdem wird eine Vorrichtung (10) zum Herstellen einer dentalen Prothese (12) erläutert. Ferner werden ein computer-implementiertes Verfahren zum Erstellen eines Schichtaufbaus für eine dentale Prothese (12), eine Vorrichtung (40) zur Datenverarbeitung, ein Computerprogramm (48), sowie ein computerlesbares Medium (46) vorgestellt.

## Beschreibung

Die Erfindung ist auf ein Verfahren zum Herstellen einer dentalen Prothese gerichtet. Die Prothese umfasst einen ersten Abschnitt zur Nachbildung von Zahnfleisch, einen zweiten Abschnitt zur Nachbildung mindestens eines Zahns sowie einen dritten Abschnitt zur Befestigung der Prothese im Mund und/oder zur Verstärkung der Prothese.

Die Erfindung betrifft zudem eine Vorrichtung zum Herstellen einer dentalen Prothese.

Auch ist die Erfindung auf ein computer-implementiertes Verfahren zum Erstellen eines Schichtaufbaus für eine dentale Prothese gerichtet.

Zusätzlich betrifft die Erfindung eine Vorrichtung zur Datenverarbeitung, ein Computerprogramm, und ein computerlesbares Medium.

In diesem Zusammenhang ist ein Aufbau einer dentalen Prothese für sich genommen bekannt, der einen ersten Abschnitt zur Nachbildung von Zahnfleisch, einen zweiten Abschnitt zur Nachbildung mindestens eines Zahns sowie einen dritten Abschnitt zur Befestigung der Prothese im Mund und/oder zur Verstärkung der Prothese umfasst. Nachdem die verschiedenen Abschnitte unterschiedliche Elemente eines Gebisses nachbilden oder zur Befestigung und/oder Verstärkung dienen, werden die verschiedenen Abschnitte üblicherweise aus unterschiedlichen Materialien hergestellt. Mit anderen Worten sind aufgrund der unterschiedlichen Funktionen dieser Abschnitte unterschiedliche Materialien notwendig. Beispielsweise können in diesem Zusammenhang der erste Abschnitt und der zweite Abschnitt aus einem Kunststoffmaterial hergestellt sein, wobei der dritte Abschnitt aus einem Metallmaterial hergestellt ist. Die Verwendung unterschiedlicher Materialien hat auch eine Auswirkung auf die Herstellung einer solchen dentalen Prothese. Insbesondere können die unterschiedlichen Materialien unterschiedliche Herstellungsverfahren und/oder unterschiedliche Randbedingungen für die Herstellung erforderlich machen. Aus diesem Grund ist die Herstellung derartiger dentaler Prothesen mit einem gewissen Aufwand verbunden.

Die Aufgabe der vorliegenden Erfindung besteht somit darin, eine Herstellung einer dentalen Prothese, die einen ersten Abschnitt zur Nachbildung von Zahnfleisch, einen zweiten Abschnitt zur Nachbildung mindestens eines Zahns sowie einen dritten Abschnitt zur Befestigung der Prothese im Mund und/oder zur Verstärkung der Prothese umfasst, zu vereinfachen.

Die Aufgabe wird durch ein Verfahren zum Herstellen einer dentalen Prothese gelöst. Die Prothese umfasst einen ersten Abschnitt zur Nachbildung von Zahnfleisch, einen zweiten Abschnitt zur Nachbildung mindestens eines Zahns sowie einen dritten Abschnitt zur Befestigung der Prothese im Mund und/oder zur Verstärkung der Prothese. Das Verfahren umfasst:
- schichtweises Herstellen des ersten Abschnitts und/oder des zweiten Abschnitts mittels eines Material Jetting Verfahrens, und
- schichtweises Herstellen des dritten Abschnitts mittels eines Schmelzschichtverfahrens.

Es wird also derjenige Abschnitt, der Zahnfleisch nachbildet, und/oder derjenige Abschnitt, der mindestens einen Zahn nachbildet, mittels eines Material Jetting Verfahrens schichtweise hergestellt. Im Unterschied dazu wird derjenige Abschnitt, der zur Befestigung der Prothese im Mund dient und/oder zur Verstärkung der Prothese, mittels eines Schmelzschichtverfahrens hergestellt. In diesem Zusammenhang wird unter einem Material Jetting Verfahren ein additives Fertigungsverfahren verstanden, mittels dem ein Bauteil, vorliegend der erste Abschnitt und/oder der zweite Abschnitt, durch ortsspezifisches Auftragen von flüssigen Materialtröpfchen aufgebaut wird. Nach dem Auftragen jedes der Materialtröpfchen kann dieses diese ausgehärtet werden, beispielsweise zu UV-Licht. Derartige Verfahren können auch als Drop on Demand-Verfahren bezeichnet werden. Mittels des Material Jetting Verfahrens können also photosensitive Polymere, z. B. Duroplasten, verarbeitet werden. Ein Beispiel für ein solches Material ist Methacrylsäuremethylester oder Methylmethacrylat (MMA). Dieses Material muss zudem mit sogenannten Photoinitiatoren versetzt sein. Ein Schmelzschichtverfahren betrifft ein additives Herstellungsverfahren, bei dem ein draht- oder filamentförmiges Material aufgeschmolzen wird und schichtweise sowie ortsspezifisch aufgetragen wird, um ein dreidimensionales Bauteil aufzubauen. Andere Bezeichnungen für ein solches Verfahren sind Fused Deposition Modeling und Fused Filament Fabrication Technology. Man kann auch davon sprechen, dass das Ausgangsmaterial im Zusammenhang mit dem Schmelzschichtverfahren extrudiert wird. Für das Schmelzschichtverfahren kommen insbesondere thermoplastische Polymere in Frage, die optional gefüllt sein können, zum Beispiel mit Glasfasern. Beispielhafte Materialien sind Polyoxymethylen (POM) und Polyetheretherketon (PEEK). Somit lässt sich jeder aus erstem Abschnitt, zweitem Abschnitt und drittem Abschnitt mittels eines Materials herstellen, das für die jeweils zugeordnete Funktion, d. h. die Nachbildung von Zahnfleisch, die Nachbildung von wenigstens einem Zahn oder die Befestigung und/oder Verstärkung, gut geeignet ist. Darüber hinaus vereinfacht ein derartiges Herstellungsverfahren die Herstellung der dentalen Prothese, da diese insgesamt schichtweise aufgebaut wird. Das bedeutet jedoch nicht, dass die Materialschichten durch die verschiedenen Abschnitte hindurch gleichmäßig, d. h. synchron aufgebaut werden müssen. Vielmehr ist es auch möglich, zunächst nur Schichten aufzubauen, die einen der drei genannten Abschnitte bilden und danach Schichten aufzubauen, die einen anderen der genannten Abschnitte bilden.

Bei der im Zusammenhang mit dem erfindungsgemäßen Verfahren zum Herstellen einer dentalen Prothese genannten dentalen Prothese kann es sich um eine Teil-Prothese oder eine Vollprothese handeln. Für den Fall, dass es sich um eine Teil-Prothese handelt, kann die Prothese insbesondere als sogenannte Klammerprothese ausgeführt sein, bei der der dritte Abschnitt dazu geeignet ist, die dentale Prothese an einem Zahn, der nicht durch die Prothese nachgebildet werden soll, zu befestigen, insbesondere festzuklemmen. Für den Fall, dass es sich um eine Vollprothese handelt, kann der dritte Abschnitte insbesondere dazu geeignet sein, die Vollprothese zu verstärken. Die Verstärkung kann dabei lokal sein, d.h. in ausgewählten oder selektierten Bereichen oder Abschnitten der Vollprothese.

Gemäß einem Beispiel erfolgt die Herstellung des ersten Abschnitts, des zweiten Abschnitt und des dritten Abschnitts im selben Bauraum. Das vereinfacht die Herstellung der dentalen Prothese weiter, da somit Handhabungsschritte entfallen können, mittels derer die dentale Prothese von einem Bauraum in einen anderen Bauraum überführt wird.

Gemäß einer Ausführungsform umfasst das Verfahren ferner: Schichtweises Herstellen eines Restzahnmodells mittels eines Material Jetting Verfahrens. Dabei bildet das Restzahnmodell einen Abschnitt des Mundes nach, auf dem die Prothese sitzen soll. Da bei bildet das Restzahnmodell insbesondere diejenigen Zähne nach, die nicht durch die Prothese nachgebildet werden sollen. An diesen Zähnen greift insbesondere der dritte Abschnitt an, z. B. wenn der dritte Abschnitt als Klammer oder Klammerelement ausgeführt ist. Durch das Herstellen des Restzahnmodells wird somit eine Basis oder ein Untergrund hergestellt, auf dem der erste Abschnitt, der zweite Abschnitt und der dritte Abschnitt der dentalen Prothese hergestellt werden können. Auf diese Weise lässt sich die dentale Prothese mit besonders hoher Präzision herstellen. Dadurch wird eine gute Passform der dentalen Prothese gewährleistet. Darüber hinaus wird die Herstellung der dentalen Prothese weiter vereinfacht, wenn das Restzahnmodell im selben Zuge hergestellt wird wie die dentale Prothese.

Gemäß einer Variante umfasst das Restzahnmodell Hohlräume, die außerhalb derjenigen Bereiche liegen, an die die Abschnitte der dentalen Prothese anliegen. Derartige Hohlräume haben einerseits den Vorteil, dass dadurch Material beim Herstellen des Restzahnmodells gespart wird. Andererseits wird durch das Vorsehen von Hohlräumen eine Herstellungsgeschwindigkeit für das Restzahnmodell gesteigert. Mit anderen Worten lässt sich das Restzahnmodell aufgrund der Hohlräume in kürzerer Zeit herstellen.

Gemäß einem Beispiel kann das Restzahnmodell als Transportvorrichtung für die Prothese verwendet werden, wenn die dentale Prothese nach ihrer Herstellung transportiert werden muss. Das ist einerseits einfach, weil die Prothese somit nicht auf eine separate Transportvorrichtung umgelagert werden muss. Darüber hinaus ist dies effizient, da zusätzlich zum Restzahnmodell keine separate Transportvorrichtung hergestellt werden muss. Darüber hinaus lässt sich auf diese Weise ein sicherer Transport gewährleisten, da das Restzahnmodell besonders gut dafür geeignet ist, die Prothese sicher daran zu befestigen.

Das Verfahren kann ferner umfassen: Schichtweises Herstellen einer Trennschicht mittels eines Material Jetting Verfahrens. Dabei liegt die Trennschicht zwischen dem Restzahnmodell und dem ersten Abschnitt und/oder dem zweiten Abschnitt. Alternativ wird die Trennschicht als zumindest abschnittsweise äußerste Schicht des Restzahnmodells hergestellt, wobei der erste Abschnitt und/oder der zweite Abschnitt an der Trennschicht anliegt. In der ersten Alternative wird die Trennschicht also auf das Restzahnmodell aufgebracht. Dabei wird die Trennschicht bevorzugt so dünn gewählt, dass eine Auswirkung auf die Präzision der dentalen Prothese und damit deren Passform vernachlässigbar oder unerheblich ist. In der zweiten Alternative wird streng genommen der Restzahnbestand durch das Restzahnmodell und durch die Trennschicht gemeinsam nachgebildet. Dadurch ergibt sich eine besonders hohe Präzision bei der Herstellung der dentalen Prothese. In beiden Alternativen bewirkt die Trennschicht, dass sich die dentale Prothese nach ihrer Herstellung leicht vom Restzahnmodell abnehmen lässt. Es müssen also nur vergleichsweise geringe Kräfte auf die dentale Prothese wirken, um diese vom Restzahnmodell abzunehmen. Auf diese Weise wird ein Beschädigungsrisiko, das aus dem Abnehmen der dentalen Prothese vom Restzahnmodell resultiert, verringert. Es versteht sich zudem, dass in beiden Alternativen die Trennschicht aus einem anderen Material hergestellt ist als die daran angrenzenden Schichten der dentalen Prothese und das Restzahnmodell.

Auch kann das Verfahren ferner umfassen: schichtweises Herstellen einer Stützstruktur für den ersten Abschnitt, den zweiten Abschnitt und/oder den dritten Abschnitt mittels eines Material Jetting Verfahrens. Insbesondere grenzt die Stützstruktur an das Restzahnmodell an oder bildet die Stützstruktur mit dem Restzahnmodell eine bauliche Einheit. Die Stützstruktur dient dabei dazu, gegenüber einer Herstellungsrichtung auskragende Abschnitte des ersten Abschnitts, des zweiten Abschnitts oder des dritten Abschnitts mit hoher Präzision und Zuverlässigkeit fertigen zu können. Dabei wird die Stützstruktur so gestaltet, dass sie die zu fertigenden, auskragenden Abschnitte stützt. Eine Stützstruktur, die an das Restzahnmodell angrenzt oder mit dem Restzahnmodell eine bauliche Einheit bildet, lässt sich dabei besonders aufwandsarm fertigen.

Als Material zum Herstellen der Stützstruktur kann grundsätzlich jedes geeignete Material gewählt werden. Insbesondere kann das Material zum Herstellen der Stützstruktur einem der Materialien entsprechen, die für den ersten Abschnitt, den zweiten Abschnitt oder den dritten Abschnitt der dentalen Prothese verwendet werden. Alternativ ist das Material, aus dem die Stützstruktur gefertigt wird, gegenüber diesen Materialien verschieden.

Gemäß einer Ausführungsform dient die Stützstruktur dem Abstützen des dritten Abschnitts, d. h. desjenigen Abschnitts der dentalen Prothese, der der Befestigung im Mund und/oder der Verstärkung der Prothese dient und mittels eines Schmelzschichtverfahrens hergestellt wird. In dieser Ausführungsform wird die Stützstruktur insbesondere aus demselben Material gefertigt, das auch zum Fertigen des zweiten Abschnitts, d. h. desjenigen Abschnitts, der wenigstens einen Zahn nachbildet, verwendet wird. Es hat sich gezeigt, dass sich dieses Material hinsichtlich seiner mechanischen Eigenschaften und hinsichtlich seines Temperaturverhaltens besonders gut zum Abstützen des dritten Abschnitts eignet.

Alternativ oder zusätzlich dient die Stützstruktur dem Abstützen des ersten Abschnitts und/oder des zweiten Abschnitts, d. h. desjenigen Abschnitts, der Zahnfleisch nachbildet, und/oder desjenigen Abschnitts, der wenigstens einen Zahn nachbildet. In einem solchen Fall ist das Stützmaterial bevorzugt verschieden vom Material, das für die Herstellung des ersten Abschnitts und vom Material, das für die Herstellung des zweiten Abschnitts verwendet wird.

Beispielsweise kann das Material zum Herstellen der Stützstruktur ein Wachsmaterial sein. Weiter wird die Stützstruktur in diesem Falle bevorzugt mittels eines Material Jetting Verfahrens hergestellt.

Gemäß einer Ausführungsform umfasst das Verfahren ferner: Generieren einer Negativform im Restzahnmodell und/oder in der Stützstruktur und wenigstens teilweises Herstellen des dritten Abschnitts mittels der Negativform. Auf diese Weise lässt sich der dritte Abschnitt mit besonders hoher Präzision herstellen. Das gilt insbesondere für vergleichsweise dünne Bereiche des dritten Abschnitts sowie für auskragende Bereiche des dritten Abschnitts.

Das Material Jetting Verfahren kann bei einer Verarbeitungstemperatur von 100°C oder weniger ausgeführt werden. Alternativ oder zusätzlich kann das Schmelzschichtverfahren bei einer Verarbeitungstemperatur von mehr als 100°C, insbesondere von mehr als 150°C, ausgeführt werden. Bevorzugt wird das Schmelzschichtverfahren bei einer Verarbeitungstemperatur von 150°C bis 450°C ausgeführt. Dabei muss sichergestellt werden, dass sich die unterschiedlichen Abschnitte der dentalen Prothese aufgrund der unterschiedlichen Verarbeitungstemperaturen nicht in negativer Weise beeinträchtigen. Nachdem die Verarbeitungstemperatur zum Herstellen des dritten Abschnitts höher ist als die Verarbeitungstemperatur zum Herstellen des ersten Abschnitts und des zweiten Abschnitts, gilt dies insbesondere an Stellen der dentalen Prothese, an denen der dritte Abschnitt den ersten Abschnitt oder den zweiten Abschnitt kontaktiert. Um eine thermische Beschädigung oder Beeinträchtigung des ersten Abschnitts und/oder des zweiten Abschnitts bei der Herstellung des dritten Abschnitts ausschließen zu können, muss dabei die tatsächlich in den ersten Abschnitt und/oder in den zweiten Abschnitt beim Herstellen des dritten Abschnitts eingebrachte Wärmemenge berücksichtigt werden. Dabei spielt eine Rolle, dass das Material, aus dem der dritte Abschnitt hergestellt wird, nach dem Austritt aus einem Auftragkopf oder einer Materialdüse zum einen Wärme an eine Umgebung, üblicherweise Luft, abgibt. Zum anderen wird Wärme an den ersten Abschnitt und/oder an den zweiten Abschnitt abgegeben, sobald das Material zum Herstellen des dritten Abschnitts den ersten Abschnitt und/oder den zweiten Abschnitt kontaktiert. Innerhalb des ersten Abschnitts und/oder des zweiten Abschnitts finden ferner Wärmeleitungsphänomene statt. Aufgrund dieser Effekte hat sich herausgestellt, dass selbst beim Ausführen eines Schmelzschichtverfahrens zum Herstellen des dritten Abschnitts mit den genannten Verarbeitungstemperaturen weder die sogenannte Ceiling-Temperatur, also diejenige Temperatur, bei der Polymerisation und Depolymerisation gleich schnell ablaufen, noch die Zersetzungstemperatur der Materialien des ersten Abschnitts und/oder des zweiten Abschnitts erreicht oder überschritten werden. Dasselbe gilt für das möglicherweise vorhandene Restzahnmodell und/oder die möglicherweise vorhandene Stützstruktur. Für das bereits beispielhaft genannte Material MMA beträgt die Ceiling-Temperatur ca. 220°C und die Zersetzungstemperatur ca. 350°C. Insgesamt lassen sich also Material Jetting Verfahren mit einer Verarbeitungstemperatur von 100°C oder weniger und Schmelzschichtverfahren mit einer Verarbeitungstemperatur von mehr als 100°C, insbesondere von mehr als 150°C, zum Herstellen der dentalen Prothese kombinieren.

Das Ausführen des Schmelzschichtverfahrens kann ein lokales Erwärmen eines Substrats für eine im Schmelzschichtverfahren aufzubringende Materialschicht umfassen. Dabei kann es sich beim Substrat um eine zuvor aufgebrachte Materialschicht des ersten Abschnitts, des zweiten Abschnitts oder des dritten Abschnitts handeln. Ebenso ist es möglich, dass es sich beim Substrat um eine Oberfläche des Restzahnmodells, eine Trennschicht oder um eine Stützstruktur handelt. In allen diesen Fällen sorgt das lokale Erwärmen des Substrats dafür, dass sich die mittels des Schmelzschichtverfahrens aufgebrachten Schichten besser verbinden. Es kann die Qualität des dritten Abschnitts gesteigert werden.

In einem Beispiel erfolgt das lokale Erwärmen des Substrats mittels einer fokussierten oder fokussierbaren Wärmequelle, zum Beispiel mittels eines Laserstrahls. Somit lässt sich in präziser Weise die Erwärmung dort bewirken, wo sie gewünscht ist, ohne dabei Bereiche zu erwärmen, deren Erwärmung eigentlich unnötig oder unerwünscht ist.

Zudem wird die Aufgabe durch eine Vorrichtung zum Herstellen einer dentalen Prothese gelöst. Die Prothese umfasst einen ersten Abschnitt zur Nachbildung von Zahnfleisch, einen zweiten Abschnitt zur Nachbildung mindestens eines Zahns sowie einen dritten Abschnitt zur Befestigung der Prothese im Mund und/oder zur Verstärkung der Prothese. Die Vorrichtung umfasst:
- ein Material Jetting Modul, das dazu ausgebildet ist, den ersten Abschnitt und/oder den zweiten Abschnitt wenigstens teilweise mittels eines Material Jetting Verfahrens herzustellen,
- ein Schmelzschichtmodul, das dazu ausgebildet ist, den dritten Abschnitt wenigstens teilweise mittels eines Schmelzschichtverfahrens herzustellen, und
- eine Bauplattform, auf der die Prothese mittels des Material Jetting Moduls und/oder mittels des Schmelzschichtmoduls schichtweise aufbaubar ist.

Mittels dieser Vorrichtung lässt sich also sowohl ein Material Jetting Verfahren als auch ein Schmelzschichtverfahren ausführen. Somit können mittels dieser Vorrichtung Bauteile hergestellt werden, die zumindest abschnittsweise mittels eines Material Jetting Verfahrens und abschnittsweise mittels eines Schmelzschichtverfahrens hergestellt werden sollen. Das gilt im speziellen für eine dentalen Prothese, bei der somit ein erster Abschnitt, der Zahnfleisch nachbildet, und/oder ein zweiter Abschnitt, der mindestens einen Zahn nachbildet, mittels eines Material Jetting Verfahrens schichtweise hergestellt werden können. Darüber hinaus kann ein dritter Abschnitt der dentalen Prothese, der zur Befestigung der Prothese im Mund dient und/oder zur Verstärkung der Prothese dient, mittels eines Schmelzschichtverfahrens hergestellt werden. Insgesamt erlaubt die Vorrichtung, unterschiedliche Abschnitte eines herzustellenden Bauteils, insbesondere der dentalen Prothese, jeweils mittels eines Materials herzustellen, das für die jeweils zugeordnete Funktion dieses Abschnitts gut geeignet ist. Dies ist zudem einfach, da dies mittels einer einzigen Vorrichtung realisiert werden kann.

Die erfindungsgemäße Vorrichtung kann aufgrund der Tatsache, dass sie dazu geeignet ist, sowohl ein Material Jetting Verfahren als auch ein Schicht Schmerzverfahren auszuführen, als hybride Vorrichtung bezeichnet werden.

Wie bereits erwähnt, ist die erfindungsgemäße Vorrichtung besonders dafür geeignet, eine dentale Prothese herzustellen, die einen ersten Abschnitt umfasst, welcher Zahnfleisch nachbildet, einen zweiten Abschnitt umfasst, welcher wenigstens einen Zahn nachbildet, und einen dritten Abschnitt umfasst, der der Befestigung der Prothese im Mund und/oder der Verstärkung dient. Dabei werden der erste Abschnitt und/oder der zweite Abschnitt mittels eines Material Jetting Verfahrens hergestellt und der dritte Abschnitt mittels eines Schmelzschichtverfahrens. Dabei zeichnet sich eine erfindungsgemäße Vorrichtung, falls Sie zum Herstellen einer dentalen Prothese eingerichtet ist, dadurch aus, dass in den Materialreservoiren der Maschine Dentalmaterialien vorhanden sind.

Gemäß einer Ausführungsform umfasst die Vorrichtung ferner eine lokal fokussierbare Wärmequelle zum Erwärmen eines Substrats für eine im Schmelzschichtverfahren aufzubringende Materialschicht. Dies sorgt dafür, dass sich die mittels des Schmelzschichtverfahrens aufgebrachten Schichten besser verbinden.

In einem Beispiel umfasst die lokal fokussierbare Wärmequelle einen Laser. Somit lässt sich in präziser Weise die Erwärmung dort bewirken, wo sie gewünscht ist, ohne dabei Bereiche zu erwärmen, deren Erwärmung eigentlich unnötig oder unerwünscht ist.

Auch kann die Vorrichtung ferner einen Rahmen oder ein Gehäuse umfassen. Dabei sind das Material Jetting Modul und das Schmelzschichtmodul am Rahmen oder Gehäuse fixiert. Die Bauplattform ist relativ zum Rahmen oder Gehäuse beweglich gelagert. Insbesondere sind dabei eine Extrusionsdüse des Schmelzschichtmoduls sowie ein Druckkopf des Material Jetting Moduls am Rahmen oder Gehäuse fixiert, stehen also relativ zum Rahmen oder Gehäuse fest. Zum Herstellen eines Bauteils unter Nutzung des Material Jetting Moduls und des Schmelzschichtmoduls muss sich also die Bauplattform bewegen. Es hat sich gezeigt, dass ein derartiger Aufbau für eine Vorrichtung, die sowohl ein Schmelzschichtmodul als auch ein Material Jetting Modul umfasst, sowohl strukturell also steuerungstechnisch einfach ist, da lediglich die Bauplattform bewegbar gelagert sein muss und mit zugehörigen Antrieben ausgestattet sein muss.

Das Material Jetting Modul kann dazu ausgebildet sein, eine Verarbeitungstemperatur von 100°C oder weniger zu gewährleisten. Alternativ oder zusätzlich kann das Schmelzschichtmodul dazu ausgebildet sein eine Verarbeitungstemperatur von mehr als 100°C, insbesondere von mehr als 150°C, zu gewährleisten. Bevorzugt kann das Schmelzschichtmodul eine Verarbeitungstemperatur von 150°C bis 450°C gewährleisten. Insgesamt lassen sich also diejenigen Abschnitte eines Bauteils, die mittels des Material Jetting Moduls hergestellt werden sollen, und diejenigen Abschnitte eines Bauteils, die mittels des Schmelzschichtmoduls hergestellt werden sollen, zuverlässig herstellen.

Die Vorrichtung kann optional eine Dokumentationseinheit umfassen, die dazu ausgebildet ist, die mittels des Materia Jetting Moduls ausgeführten Material Jetting Verfahren und/oder die mittels des Schmelzschichtmoduls ausgeführten Schmelzschichtverfahren zu dokumentieren. Das ist insbesondere für Medizinprodukte oder Dentalprodukte relevant, um eine hohe Qualität und eine Rückverfolgbarkeit möglicher Fehler sicherzustellen.

Außerdem wird die Aufgabe durch ein computer-implementiertes Verfahren zum Erstellen eines Schichtaufbaus für eine dentale Prothese gelöst. Die Prothese umfasst einen ersten Abschnitt zur Nachbildung von Zahnfleisch, einen zweiten Abschnitt zur Nachbildung mindestens eines Zahns sowie einen dritten Abschnitt zur Befestigung der Prothese im Mund und/oder zur Verstärkung der Prothese. Das Verfahren umfasst:
- Erhalten von Geometriedaten, die wenigstens eine Außenhülle des ersten Abschnitts, eine Außenhülle des zweiten Abschnitts und eine Außenhülle des dritten Abschnitts beschreiben,
- Ermitteln von Schichtaufbaudaten, die einen ersten Schichtaufbau für den ersten Abschnitt, einen zweiten Schichtaufbau für den zweiten Abschnitt und einen dritten Schichtaufbaus für den dritten Abschnitt beschreiben, wobei der erste Schichtaufbau und der zweite Schichtaufbau zur Herstellung mittels eines Material Jetting Verfahrens und der dritte Schichtaufbau zur Herstellung mittels eines Schmelzschichtverfahrens vorgesehen sind, und wobei die Schichtaufbaudaten basierend auf den Geometriedaten ermittelt werden,
- Bereitstellen der Schichtaufbaudaten an eine einzelne Vorrichtung zum Herstellen einer dentalen Prothese.

In diesem Zusammenhang werden die Geometriedaten beispielsweise von einer Konstruktionssoftware, zum Beispiel von einem CAD-System, erhalten. Dabei beschreiben die Geometriedaten vereinfacht gesagt das gewünschte Aussehen der Dentalrestauration. Das Ermitteln von Schichtaufbaudaten basiert darauf und wird auch als Slicing bezeichnet. Dabei geht es darum, innerhalb der von den Geometriedaten vorgegebenen Außenhüllen jeweils einen Schichtaufbau so zu definieren, dass dieser mittels des zugeordneten Herstellungsverfahrens umgesetzt werden kann, d. h. sodass mittels des zugeordneten Herstellungsverfahrens entsprechende Abschnitte schichtweise gefertigt werden können. Dabei kann es nötig sein, beim Ermitteln des Schichtaufbaus das zur schichtweisen Herstellung verwendete Verfahren zu berücksichtigen. Das bedeutet, dass sich unterschiedliche Schichtaufbauten ergeben können, wenn entsprechende Abschnitte mittels unterschiedlicher Verfahren zum schichtweisen Herstellen produziert werden sollen. Mittels des vorliegenden computer-implementierten Verfahrens lassen sich also Schichtaufbaudaten für verschiedene Abschnitte einer dentalen Restauration generieren, wobei die verschiedenen Abschnitte aus verschiedenen Materialien und mittels verschiedener Verfahren produziert werden sollen. Dies innerhalb eines einzigen computer-implementierten Verfahrens zu tun, ist einfach und effizient. Die Tatsache, dass dann die Schichtaufbaudaten für eine einzelne Vorrichtung bereitgestellt werden, ermöglicht es, die Dentalrestauration mittels einer einzelnen Vorrichtung herzustellen. Dabei kann es sich insbesondere um eine erfindungsgemäße Vorrichtung handeln, die sowohl ein Material Jetting Verfahren als auch ein Schmelzschichtverfahren ausführen kann. Insbesondere lassen sich somit unter Nutzung des computerimplementierten Verfahrens ausgehend von den Geometriedaten direkt Schichtaufbaudaten bereitstellen, die in einer solchen Vorrichtung genutzt werden können. Insgesamt lassen sich somit dentale Prothesen in einfacher und durchgängiger Weise herstellen.

Gemäß einer Ausführungsform können die Geometriedaten zusätzlich wenigstens einen Abschnitt einer Außenhülle eines Restzahnmodells beschreiben. Ferner kann das Ermitteln der Schichtaufbaudaten das Ermitteln eines vierten Schichtaufbaus für wenigstens einen Abschnitt des Restzahnmodells umfassen. Wie zuvor können die Geometriedaten, die eine Außenhülle des wenigstens einen Abschnitts des Restzahnmodells beschreiben, von einer Konstruktionssoftware erhalten werden. Durch das Bereitstellen des vierten Schichtaufbaus lässt sich mittels der einzelnen Vorrichtung auch ein Restzahnmodell herstellen. Dieses dient als Basis oder Untergrund für das Herstellen der dentalen Prothese. Auf diese Weise lässt sich die dentale Prothese mit besonders hoher Präzision herstellen. Dadurch wird eine gute Passform der dentalen Prothese gewährleistet. Die Tatsache, dass auch der vierte Schichtaufbau mittels des computerimplementierten Verfahrens bereitgestellt wird, d.h. zusammen mit dem ersten Schichtaufbau, dem zweiten Schichtaufbau und dem dritten Schichtaufbau, erhöht die Effizienz und Durchgängigkeit des Verfahrens.

Gemäß einer Variante werden beim Erstellen des vierten Schichtaufbaus Hohlräume vorgesehen, die außerhalb derjenigen Bereiche liegen, an die die Abschnitte der dentalen Prothese anliegen. Derartige Hohlräume haben einerseits den Vorteil, dass dadurch Material beim Herstellen des Restzahnmodells gespart wird. Andererseits wird durch das Vorsehen von Hohlräumen eine Herstellungsgeschwindigkeit für das Restzahnmodell gesteigert. Mit anderen Worten lässt sich das Restzahnmodell in kürzerer Zeit herstellen.

Gemäß einem Beispiel umfasst das Verfahren ein Ermitteln einer für die Herstellung der dentalen Prothese notwendigen Stützstruktur. Dabei umfasst das Ermitteln der Schichtaufbaudaten das Ermitteln eines fünften Schichtaufbaus für die Stützstruktur. Es wird also einerseits eine Notwendigkeit für eine Stützstruktur ermittelt und andererseits, für den Fall, dass eine Stützstruktur nötig ist, deren Schichtaufbau. Das impliziert, dass auch ein Bereich, d.h. ein Volumen ermittelt wird, in dem die Stützstruktur angeordnet werden muss. Die Stützstruktur dient dabei dazu, gegenüber einer Herstellungsrichtung auskragende Abschnitte des ersten Abschnitts, des zweiten Abschnitts oder des dritten Abschnitts mit hoher Präzision und Zuverlässigkeit fertigen zu können. Dabei wird die Stützstruktur so gestaltet, dass sie die zu fertigenden, auskragenden Abschnitte stützt. Beim Ermitteln der notwendigen Stützstruktur müssen also auskragende Bereiche des ersten Abschnitts, des zweiten Abschnitts und des dritten Abschnitts ermittelt werden und mit einem Grenzwert verglichen werden, der angibt, welche Arten von auskragenden Bereichen zur Herstellung eine Stützstruktur benötigen. Optional wird dabei auch ein Material festgelegt, aus dem die Stützstruktur hergestellt wird. Die Tatsache, dass dieser fünfte Schichtaufbau mittels des computerimplementierten Verfahrens bereitgestellt wird, d.h. zusammen mit dem ersten Schichtaufbau, dem zweiten Schichtaufbau und dem dritten Schichtaufbau, erhöht die Effizienz und Durchgängigkeit des Verfahrens.

Auch kann das Verfahren ferner ein Ermitteln einer für die Herstellung der dentalen Prothese notwendigen Trennschicht umfassen. Dabei umfasst das Ermitteln der Schichtaufbaudaten das Ermitteln eines sechsten Schichtaufbaus für die Trennschicht. Es wird also einerseits eine Notwendigkeit für eine Trennschicht ermittelt und andererseits, für den Fall, dass eine Trennschicht nötig ist, deren Schichtaufbau. Das impliziert, dass auch ein Bereich, d.h. ein Volumen ermittelt wird, in dem die Trennschicht angeordnet werden muss. Dabei wird der sechste Schichtaufbau als Bestandteil der Schichtaufbaudaten für die Vorrichtung zum Herstellen einer dentalen Prothese bereitgestellt. Eine solche Trennschicht bewirkt, dass sich die dentale Prothese nach ihrer Herstellung leicht vom Restzahnmodell abnehmen lässt. Beim Ermitteln der notwendigen Trennschicht müssen also Kontakte zwischen dem Restzahnmodell sowie der dentalen Prothese ermittelt werden. Optional wird dabei auch ein Material festgelegt, aus dem die Trennschicht hergestellt wird. Die Tatsache, dass der sechste Schichtaufbau mittels des computerimplementierten Verfahrens bereitgestellt wird, d.h. zusammen mit dem ersten Schichtaufbau, dem zweiten Schichtaufbau und dem dritten Schichtaufbau, erhöht die Effizienz und Durchgängigkeit des Verfahrens. Es versteht sich, dass das Vorsehen einer Trennschicht eine Präzision der herzustellenden dentalen Prothese nicht beeinträchtigen darf. Es wird daher das von der Trennschicht, d.h. vom sechsten Schichtaufbau, beanspruchte Volumen sozusagen vom Volumen des Restzahnmodells und/oder, falls vorhanden, vom Volumen der Stützstruktur, d.h. vom fünften Schichtaufbau, abgezogen. Allgemeiner gesagt wird das Volumen der Trennschicht beim Bestimmen der Schichtaufbaudaten berücksichtigt.

Ebenso wird die Aufgabe durch eine Vorrichtung zur Datenverarbeitung gelöst, welche Mittel zur Ausführung des erfindungsgemäßen Verfahrens zum Erstellen eines Schichtaufbaus für eine dentalen Prothese umfasst. Mittels einer solchen Vorrichtung zur Datenverarbeitung lassen sich also Schichtaufbaudaten für verschiedene Abschnitte einer dentalen Restauration generieren, wobei die verschiedenen Abschnitte aus verschiedenen Materialien und mittels verschiedener Verfahren produziert werden sollen. Dies mittels einer einzigen Vorrichtung zur Datenverarbeitung zu tun, ist einfach und effizient. Die Tatsache, dass dann die Schichtaufbaudaten für eine einzelne Vorrichtung bereitgestellt werden, ermöglicht es, die Dentalrestauration mittels einer einzelnen Vorrichtung herzustellen. Dabei kann es sich insbesondere um eine erfindungsgemäße Vorrichtung handeln, die sowohl ein Material Jetting Verfahren als auch ein Schmelzschichtverfahren ausführen kann. Insbesondere lassen sich somit unter Nutzung der Vorrichtung zur Datenverarbeitung ausgehend von den Geometriedaten direkt Schichtaufbaudaten bereitstellen, die in einer solchen Vorrichtung genutzt werden können. Insgesamt lassen sich somit dentale Prothesen in einfacher und durchgängiger Weise herstellen.

Ferner wird die Aufgabe durch ein Computerprogramm gelöst, welches Befehle umfasst, die bei der Ausführung des Computerprogramms durch einen Computer diesen veranlassen, das erfindungsgemäße Verfahren zum Erstellen eines Schichtaufbaus für eine dentalen Prothese auszuführen. Mittels eines solchen Computerprogramms lassen sich also Schichtaufbaudaten für verschiedene Abschnitte einer dentalen Restauration generieren, wobei die verschiedenen Abschnitte aus verschiedenen Materialien und mittels verschiedener Verfahren produziert werden sollen. Dies mittels eines einzigen Computerprogramms zu tun, ist einfach und effizient. Die Tatsache, dass dann die Schichtaufbaudaten für eine einzelne Vorrichtung bereitgestellt werden, ermöglicht es, die Dentalrestauration mittels einer einzelnen Vorrichtung herzustellen. Dabei kann es sich insbesondere um eine erfindungsgemäße Vorrichtung handeln, die sowohl ein Material Jetting Verfahren als auch ein Schmelzschichtverfahren ausführen kann. Insbesondere lassen sich somit unter Nutzung des Computerprogramms ausgehend von den Geometriedaten direkt Schichtaufbaudaten bereitstellen, die in einer solchen Vorrichtung genutzt werden können. Insgesamt lassen sich somit dentale Prothesen in einfacher und durchgängiger Weise herstellen.

Auch wird die Aufgabe durch ein computerlesbares Medium gelöst, welches Befehle umfasst, die bei der Ausführung durch einen Computer diesen veranlassen, das erfindungsgemäße Verfahren zum Erstellen eines Schichtaufbaus für eine dentalen Prothese auszuführen. Mittels eines solchen computerlesbaren Mediums lassen sich also Schichtaufbaudaten für verschiedene Abschnitte einer dentalen Restauration generieren, wobei die verschiedenen Abschnitte aus verschiedenen Materialien und mittels verschiedener Verfahren produziert werden sollen. Dies mittels eines einzigen computerlesbaren Mediums zu tun, ist einfach und effizient. Die Tatsache, dass dann die Schichtaufbaudaten für eine einzelne Vorrichtung bereitgestellt werden, ermöglicht es, die Dentalrestauration mittels einer einzelnen Vorrichtung herzustellen. Dabei kann es sich insbesondere um eine erfindungsgemäße Vorrichtung handeln, die sowohl ein Material Jetting Verfahren als auch ein Schmelzschichtverfahren ausführen kann. Insbesondere lassen sich somit unter Nutzung des computerlesbaren Mediums ausgehend von den Geometriedaten direkt Schichtaufbaudaten bereitstellen, die in einer solchen Vorrichtung genutzt werden können. Insgesamt lassen sich somit dentale Prothesen in einfacher und durchgängiger Weise herstellen.

Es versteht sich, dass Merkmale, Effekte und/oder Vorteile, die im Zusammenhang mit einem aus erfindungsgemäßem Verfahren zum Herstellen einer dentalen Prothese, erfindungsgemäßer Vorrichtung zum Herstellen einer dentalen Prothese, erfindungsgemäßem computerimplementierten Verfahren, erfindungsgemäßer Vorrichtung zur Datenverarbeitung, erfindungsgemäßem Computerprogramm, und erfindungsgemäßem computerlesbaren Medium erwähnt wurden, auch für die jeweils anderen aus erfindungsgemäßem Verfahren zum Herstellen einer dentalen Prothese, erfindungsgemäßer Vorrichtung zum Herstellen einer dentalen Prothese, erfindungsgemäßem computer-implementierten Verfahren, erfindungsgemäßer Vorrichtung zur Datenverarbeitung, erfindungsgemäßem Computerprogramm, und erfindungsgemäßem computerlesbaren Medium gelten.

Die Erfindung wird nachstehend anhand verschiedener Ausführungsbeispiele erläutert, die in den beigefügten Zeichnungen gezeigt sind. Es zeigen:
- Figur 1: eine erfindungsgemäße Vorrichtung zum Herstellen einer dentalen Prothese in einem ersten Betriebszustand, wobei die Vorrichtung zum Herstellen mit einer erfindungsgemäßen Vorrichtung zur Datenverarbeitung gekoppelt ist, und wobei mittels der erfindungsgemäßen Vorrichtung zum Herstellen ein erfindungsgemäßes Verfahren zum Herstellen der dentalen Prothese ausgeführt werden kann,
- Figur 2: die Vorrichtung aus Figur 1 in einem zweiten Betriebszustand,
- Figur 3: ein Restzahnmodell mit einem Abschnitt einer dentalen Prothese, der zum Befestigen der Prothese im Mund und zur Verstärkung der Prothese ausgebildet ist, in einem Zwischenzustand der Herstellung der dentalen Prothese,
- Figur 4: einen Abschnitt einer mittels der erfindungsgemäßen Vorrichtung und mittels des erfindungsgemäßen Verfahrens hergestellten dentalen Prothese, entlang einer Betrachtungsrichtung, die der Richtung IV in Figur 3 entspricht,
- Figur 5: den Abschnitt der dentalen Prothese aus Figur 4, wobei zusätzlich eine Stützstruktur und eine Trennschicht eingezeichnet sind,
- Figur 6: eine Detailansicht der dentalen Prothese aus Figur 4 entlang der Richtung VI in Figur 4, und
- Figur 7: eine Detailansicht der dentalen Prothese aus Figur 5 entlang der Richtung VII in Figur 5.

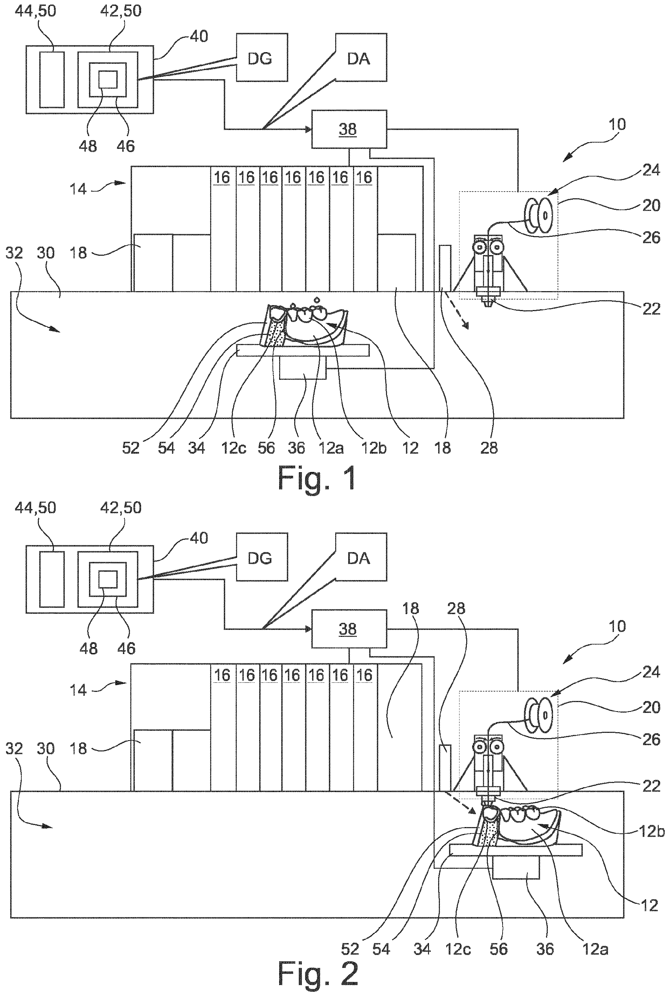

Figur 1 zeigt eine Vorrichtung 10 zum Herstellen einer dentalen Prothese 12.

Dabei umfasst die Vorrichtung 10 ein Material Jetting Modul 14, das dazu ausgebildet ist, Teile oder Abschnitte der dentalen Prothese 12 mittels eines Material Jetting Verfahrens herzustellen.

Wie bereits erläutert, wird beim Material Jetting Verfahren Ausgangsmaterial in Tröpfchenform auf ein Substrat aufgebracht, um aus einer Mehrzahl an Tröpfchen ein dreidimensionales Bauteil aufzubauen.

Das dargestellte Material Jetting Modul umfasst insgesamt sieben lediglich schematisch dargestellte Druckeinheiten 16, die jeweils ein Reservoir mit dentalem Ausgangsmaterial sowie eine Düse zu dessen tröpfchenweiser Abgabe umfassen.

Dabei dienen drei der Druckeinheiten 16 der Herstellung von Ersatzzähnen. Die jeweiligen Reservoire dieser Druckeinheiten 16 umfassen also jeweils unterschiedliche Materialien, die jedoch alle zum Herstellen eines Ersatzzahns verwendet werden können.

Zwei der Druckeinheiten 16 dienen der Herstellung einer Nachbildung von Zahnfleisch, d. h. einer Prothesenbasis. Die jeweiligen Reservoire dieser Druckeinheiten 16 umfassen also jeweils unterschiedliche Materialien, die jedoch alle zum Herstellen einer Zahnfleischnachbildung verwendet werden können.

Eine weitere der Druckeinheiten 16 dient der Herstellung einer später noch im Detail zu erläuternden Stützstruktur. Das zugehörige Reservoir umfasst also ein Stützmaterial.

Die verbleibende Druckeinheit 16 dient der Herstellung einer Trennschicht, die später noch im Detail erläutert werden wird. Das zugehörige Reservoir umfasst also ein Trennschichtmaterial.

Es wird betont, dass die Anzahl der Druckeinheiten 16 und insbesondere die Anzahl der Druckeinheiten 16, die für die Herstellung von Ersatzzähnen und/oder einer Zahnfleischnachbildung vorgesehen sind, rein illustrativ ist. Es können also auch mehr oder weniger Druckeinheiten für diese Zwecke vorhanden sein.

Im dargestellten Beispiel sind alle mittels des Material Jetting Moduls 14 bereitgestellten Materialien Methylmethacrylat-Materialien, d.h. MMA-Materialien. Ferner sind alle mittels des Material Jetting Moduls 14 bereitgestellten Materialien photosensitiv, d.h. das MMA-Material ist mit Photoinitiatoren versetzt. Das bedeutet, dass diese Materialien nach dem Aufbringen auf ein Substrat mittels Belichtung gehärtet werden können. Die Belichtung erfolgt dabei insbesondere mittels UV-Licht.

Das Material Jetting Modul 14 umfasst daher auch Belichtungseinheiten 18. Diese sind mit Quellen für UV-Licht ausgestattet, sodass mittels der Belichtungseinheiten 18 die Materialien aus den verschiedenen Druckeinheiten 16 ausgehärtet werden können.

Die Vorrichtung 10 umfasst ferner ein Schmelzschichtmodul 20, das dazu ausgebildet ist, einen Teil oder Abschnitt der dentalen Prothese 12 mittels eines Schmelzschichtverfahrens herzustellen.

Das Schmelzschichtmodul 20 umfasst hierzu eine beheizbare Extrusionsdüse 22 und eine Filamentfördereinheit 24. Wie bereits erläutert, kann somit ein mittels der Filamentfördereinheit 24 bereitgestelltes Filament 26 unter Nutzung der Extrusionsdüse 22 aufgeschmolzen werden und schichtweise auf ein Substrat aufgebracht werden, um ein dreidimensionales Bauteil aufzubauen.

In der dargestellten Ausführungsform ist das Filament ein Polyetheretherketon-Material, d.h. ein PEEK-Material.

Ferner umfasst die Vorrichtung eine lediglich schematisch eingezeichnete, lokal fokussierbare Wärmequelle 28, die beispielsweise eine Laserquelle umfassen kann. Mittels der lokal fokussierbaren Wärmequelle 28 lässt sich ein Substrat für eine im Schmelzschichtverfahren aufzubringende Materialschicht lokal erwärmen.

Die Vorrichtung 10 umfasst zudem ein Gehäuse 30, in dessen Innerem ein Bauraum 32 zum Aufbauen der dentalen Prothese 12 gebildet ist.

Innerhalb des Bauraums 32 ist außerdem eine Bauplattform 34 vorgesehen, auf der die Prothese 12 mittels des Material Jetting Moduls 14 und/oder mittels des Schmelzschichtmoduls 20 schichtweise aufbaubar ist.

Die Bauplattform 34 ist dabei mit einer lediglich schematisch dargestellten Antriebseinheit 36 gekoppelt, sodass sich die Bauplattform 34 mittels der Antriebseinheit 36 zumindest entlang dreier Raumrichtungen innerhalb des Bauraums 32 translatorisch bewegen lässt.

Die Bauplattform 34 ist also relativ zum Gehäuse 30 beweglich gelagert.

Im Unterschied dazu sind in der dargestellten Ausführungsform das Material Jetting Modul 14 und das Schmelzschichtmodul 20 am Gehäuse 30, vorliegend an eine Außenseite des Gehäuses 30, fixiert. Das bedeutet, dass sich weder das Material Jetting Modul 14 noch das Schmelzschichtmodul 20 relativ zum Gehäuse 30 bewegen können. Das gilt insbesondere auch für die Komponenten des Material Jetting Moduls 14 und des Schmelzschichtmoduls 20. Das bedeutet, dass sich weder die einzelnen Druckeinheiten 16 noch die Extrusionsdüse 22 relativ zum Gehäuse 30 bewegen lassen.

Die Vorrichtung 10 umfasst darüber hinaus eine Steuereinheit 38, die steuerungstechnisch mit dem Material Jetting Modul 14, dem Schmelzschichtmodul 20, sowie mit der Antriebseinheit 36 gekoppelt ist. Somit lassen sich mittels der Steuerungseinheit 38 sowohl das Material Jetting Verfahren als auch das Schmelzschichtverfahren zum Herstellen der dentalen Prothese 12 ausführen.

In diesem Zusammenhang zeigt die Figur 1 die Vorrichtung 10 in einem ersten Betriebszustand, in dem ein Material Jetting Verfahren ausgeführt wird. Die Figur 2 zeigt die Vorrichtung 10 in einem zweiten Betriebszustand, in dem ein Schichtschmelzverfahren ausgeführt wird.

Hierfür ist es notwendig, dass in der Steuerungseinheit 38 Informationen hinsichtlich der Schichtaufbauten der verschiedenen Abschnitte der dentalen Prothese 12 vorliegen.

Hierzu ist im dargestellten Beispiel eine Vorrichtung 40 zur Datenverarbeitung vorgesehen.

Die Vorrichtung 40 zur Datenverarbeitung umfasst einen Speichereinheit 42 und eine Recheneinheit 44.

Die Speichereinheit 42 umfasst dabei ein computer-lesbares Medium 46.

Auf dem computer-lesbaren Medium 46 ist ein Computerprogramm 48 gespeichert. Dabei umfasst das Computerprogramm 48, und somit auch das computer-lesbare Medium 46, Befehle, die bei der Ausführung des Computerprogrammes 48 durch die Recheneinheit 44, oder allgemeiner gesprochen einen Computer, diesen veranlassen, ein Verfahren zum Erstellen eines Schichtaufbaus für eine dentalen Prothese 12 auszuführen.

Die Speichereinheit 42 und die Recheneinheit 44 stellen somit Mittel 50 zur Ausführung des Verfahrens zum Erstellen eines Schichtaufbaus für eine dentalen Prothese 12 dar.

Im Zuge dieses Verfahrens werden in einem ersten Schritt Geometriedaten DG erhalten, die beispielsweise mittels eines Konstruktionsprogramms, zum Beispiel eines CAD-Systems, erstellt werden können.

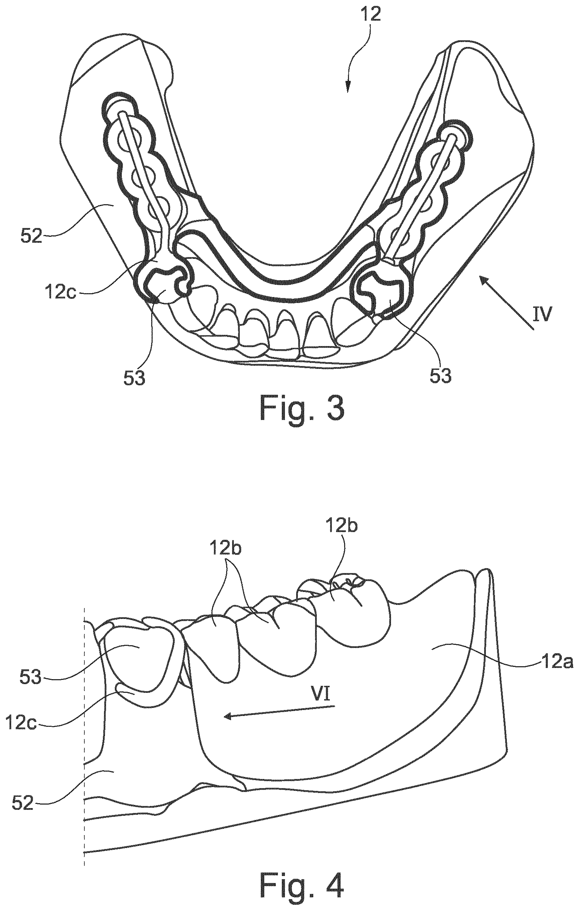

Nachdem im dargestellten Beispiel die herzustellende dentale Prothese 12 einen ersten Abschnitt 12a zur Nachbildung von Zahnfleisch, einen zweiten Abschnitt 12b zur Nachbildung mindestens eines Zahns sowie einen dritten Abschnitt 12c zur Befestigung der Prothese 12 im Mund und/oder zur Verstärkung umfasst (siehe insbesondere Figur 4), beschreiben die Geometriedaten DG eine Außenhülle des ersten Abschnitts, eine Außenhülle des zweiten Abschnitts und eine Außenhülle des dritten Abschnitts.

Im dargestellten Beispiel beschreiben die Geometriedaten DG außerdem eine Außenhülle eines Restzahnmodells, d. h. eines Modells, das diejenigen Abschnitte einer Mundhöhle nachbildet, die mit der herzustellenden dentalen Prothese 12 in Kontakt treten sollen. Dieses Restzahnmodell wird dabei im Zuge des Verfahrens dahingehend verarbeitet, dass ein Restzahnmodellabschnitt bestimmt wird, der mit dem ersten Abschnitt 12a, dem zweiten Abschnitt12b und/oder dem dritten Abschnitt 12c in Kontakt steht.

Basierend auf den Geometriedaten DG werden dann in einem zweiten Schritt Schichtaufbaudaten DA ermittelt.

Das bedeutet, dass ein erster Schichtaufbau A1 für den ersten Abschnitt 12a, ein zweiter Schichtaufbau A2 für den zweiten Abschnitt 12b, ein dritter Schichtaufbau A3 für den dritten Abschnitt 12c sowie ein vierter Schichtaufbau A4 für den Restzahnmodellabschnitt ermittelt wird. Es werden somit für jeden dieser Abschnitte eine Mehrzahl an Schichten ermittelt, aus denen der jeweilige Abschnitt aufgebaut werden kann. Hierfür können für jeden der Abschnitte Verfahren angewendet werden, die für sich genommen bekannt sind.

Dabei sind der erste Schichtaufbau A1, der zweite Schichtaufbau A2 und der vierte Schichtaufbau A4 zur Herstellung mittels eines Material Jetting Verfahrens vorgesehen. Der dritte Schichtaufbau A3 ist zur Herstellung mittels eines Schmelzschichtverfahrens vorgesehen.

Anschließend, in einem dritten Schritt, werden der erste Schichtaufbau A1, der zweite Schichtaufbau A2, der dritte Schichtaufbau A3 und der vierte Schichtaufbau A4 in Form von Schichtaufbaudaten DA für die Vorrichtung 10 zum Herstellen der dentalen Prothese 12 bereitgestellt. Das kann dadurch erfolgen, dass die Schichtaufbaudaten DA an die Steuereinheit 38 der Vorrichtung 10 übermittelt werden. Dies ist in Figur 1 und Figur 2 mittels eines Pfeils illustriert.

Es versteht sich dabei, dass die Vorrichtung 40 zur Datenverarbeitung von der Vorrichtung 10 zum Herstellen der dentalen Prothese 12 separat sein kann. Es kommt lediglich darauf an, das zu einem Zeitpunkt, zu dem mittels der Vorrichtung 10 die dentale Prothese 12 hergestellt werden soll, die notwendigen Schichtaufbaudaten DA in der Steuereinheit 38 vorliegen.

Alternativ zu einer separat von der Vorrichtung 10 vorgesehenen Vorrichtung 40 ist es auch möglich, die Vorrichtung 40 zur Datenverarbeitung als Bestandteil der Vorrichtung 10 auszuführen.

Gemäß einem optionalen Schritt umfasst das Verfahren zum Erstellen eines Schichtaufbaus für eine dentale Prothese 12 auch ein Ermitteln einer für die Herstellung der dentalen Prothese 12 notwendigen Stützstruktur. Das bedeutet, dass Bereiche der herzustellenden dentalen Prothese 12 ermittelt werden, die im Zuge der Herstellung mittels einer Stützstruktur gestützt werden müssen.

Im Zuge des Verfahrens wird dann auch für diese Stützstruktur ein Schichtaufbau ermittelt, der als fünfter Schichtaufbau A5 bezeichnet werden kann, und als Bestandteil der Schichtaufbaudaten DA an die Vorrichtung zum Herstellen der dentalen Prothese 12 bereitgestellt.

Gemäß einer weiteren Option umfasst das Verfahren zum Erstellen eines Schichtaufbaus für die dentale Prothese 12 auch ein Ermitteln notwendiger Trennschichten. Das bedeutet, dass Bereiche der herzustellenden dentalen Prothese 12 ermittelt werden, die im Zuge der Herstellung mittels einer Trennschicht vom Restzahnmodell, genauer gesagt vom Restzahnmodellabschnitt, separiert werden müssen.

Gemäß dieser Option wird ein sechster Schichtaufbau A6 ermittelt, der einen Schichtaufbau der Trennschicht beschreibt und als Bestandteil der Schichtaufbaudaten DA an die Vorrichtung 10 zum Herstellen der dentalen Prothese 12 bereitgestellt.

Unter Nutzung der Vorrichtung 10 zum Herstellen der dentalen Prothese 12 lässt sich somit ein Verfahren zum Herstellen einer dentalen Prothese 12 ausführen.

Wie bereits erwähnt, umfasst die Prothese 12 dabei einen ersten Abschnitt 12a zur Nachbildung von Zahnfleisch, einen zweiten Abschnitt 12b zur Nachbildung mindestens eines Zahns sowie einen dritten Abschnitt 12c zur Befestigung der Prothese im Mund und/oder zur Verstärkung. In der dargestellten Ausführungsform dient der dritte Abschnitt 12c sowohl zur Befestigung der Prothese im Mund als auch zur Verstärkung (siehe insbesondere Figur 3).

Der dritte Abschnitt 12c ist dabei insgesamt bogenförmig und folgt im Wesentlichen demjenigen Kieferbogen, an dem er getragen werden soll. Dabei umfasst der dritte Abschnitt 12c zwei klammerförmige Bereiche, mittels derer der dritte Abschnitt 12c und somit die gesamte dentale Prothese 12 an vorhandene Restzähnen, die im Restzahnmodell 52 mit dem Bezugszeichen 53 bezeichnet sind, befestigt werden kann. Aus diesem Grund werden derartige Prothesen 12 auch Klammerprothesen genannt.

Im Zuge des Verfahrens zum Herstellen der dentalen Prothese 12 wird mittels eines Material Jetting Verfahrens, d. h. unter Nutzung des Material Jetting Moduls 14 ein Restzahnmodell 52 schichtweise hergestellt. Das Restzahnmodell 52 bildet einen Abschnitt des Mundes nach, auf dem die Prothese 12 sitzen soll. Dabei werden auch diejenigen Zähne als Restzähne 53 innerhalb des Restzahnmodells 52 nachgebildet, an denen die dentale Prothese 12 befestigt werden kann.

In der dargestellten Ausführungsform wird für die Herstellung des Restzahnmodells 52 zumindest im Kontaktbereich mit dem dritten Abschnitt 12c dasselbe Material verwendet, das auch für die Herstellung der Ersatzzähne, d. h. für die Nachbildung des wenigstens einen Zahns, verwendet wird.

Außerdem werden im Zuge des Verfahrens ebenfalls mittels eines Material Jetting Verfahrens, d. h. ebenfalls unter Nutzung des Material Jetting Moduls 14, der erste Abschnitt 12a und der zweite Abschnitt 12b schichtweise hergestellt. D. h. es werden mittels des Material Jetting Verfahrens sowohl eine Zahnfleischnachbildung als auch wenigstens ein Ersatzzahn schichtweise hergestellt. Hierfür werden die bereits erläuterten Materialien aus den jeweils zugeordneten Druckeinheiten 16 verwendet.

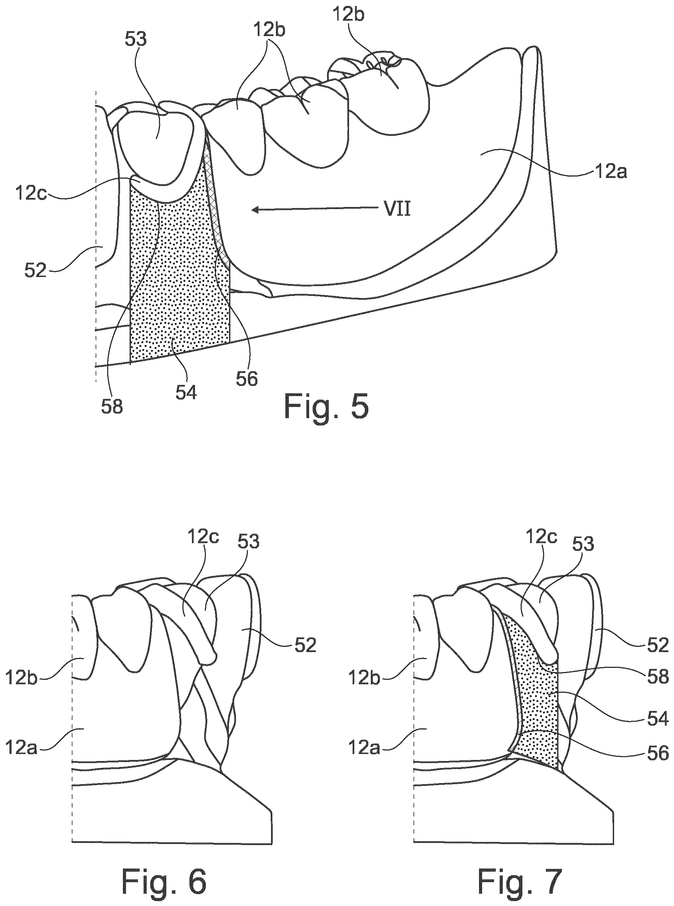

Nachdem bei der herzustellenden dentalen Prothese 12 wenigstens ein Bereich des dritten Abschnitts 12c, d. h. ein Bereich desjenigen Abschnitts der dentalen Prothese 12, der zu deren Befestigung im Mund und zu deren Verstärkung ausgebildet ist, gegenüber einer Baurichtung auskragt, umfasst das Verfahren ferner ein schichtweises Herstellen einer Stützstruktur 54 für den dritten Abschnitt 12c (siehe insbesondere Figuren 5 und 7).

Im dargestellten Beispiel wird zum Erstellen der Stützstruktur 54 ein Material Jetting Verfahren verwendet. Ferner wird in der dargestellten Ausführungsform die Stützstruktur 54 aus demselben Material hergestellt, aus dem auch die Ersatzzähne hergestellt werden.

Nachdem vorliegend die Stützstruktur 54 direkt angrenzend an das Restzahnmodell benötigt wird, kann die Stützstruktur 54 als Bestandteil des Restzahnmodells 52 ausgeführt werden. Das bedeutet, dass das Restzahnmodell 52 und die Stützstruktur 54 eine bauliche Einheit bilden.

Die Stützstruktur 54 grenzt jedoch nicht nur an das Restzahnmodell 52 an, sondern auch an den ersten Abschnitt 12a der dentalen Prothese 12, d. h. an diejenigen Abschnitt, der Zahnfleisch nachbildet.

Um sicherzustellen, dass es nicht zu unerwünschten Verbindungen zwischen der Stützstruktur 54 und dem ersten Abschnitt 12a kommt, wird eine Trennschicht 56 schichtweise hergestellt. Die Trennschicht 56 separiert die Stützstruktur 54 und den ersten Abschnitt 12 ab (siehe insbesondere Figuren 5 und 7).

Dabei wird auch für die Trennschicht 56 ein Material Jetting Verfahren verwendet. Dabei wird jedoch für die Trennschicht 56 ein Material verwendet, das sowohl vom ersten Abschnitt 12a als auch von der Stützstruktur 54 verschieden ist. Beispielsweise wird hierfür ein WachsMaterial verwendet.

Um auf Basis der Stützstruktur 54 den dritten Abschnitt 12c präzise herstellen zu können, wird ferner in demjenigen Bereich, in dem der dritte Abschnitt 12c an die Stützstruktur 54 anliegt, eine Negativform 58 gefertigt, innerhalb derer der dritte Abschnitt 12c wenigstens teilweise hergestellt wird (siehe Figuren 5 und 7).

Es versteht sich, dass das Vorsehen einer Stützstruktur vorstehend lediglich im Zusammenhang mit dem Abstützen des dritten Abschnitts 12c erläutert wurde. Je nach Ausgestaltung der herzustellenden dentalen Prothese 12, kann es jedoch genauso möglich sein alternativ oder zusätzlich eine Stützstruktur 54 für den ersten Abschnitt 12a und oder den zweiten Abschnitt 12b herzustellen.

Wie bereits erläutert, wird für das Herstellen des ersten Abschnitts, des zweiten Abschnitts und der Stützstruktur 54 ein MMA-Material verwendet.

Insgesamt wird das Material Jetting Verfahren bei einer Verarbeitungstemperatur von 100°C oder weniger ausgeführt (siehe nochmals erster Betriebszustand in Figur 1).

Darüber hinaus umfasst das Verfahren zum Herstellen der dentalen Prothese 12 das schichtweise Herstellen des dritten Abschnitts 12c, d. h. desjenigen Abschnitts, der der Befestigung der dentalen Prothese 12 im Mund und der Verstärkung der dentalen Prothese 12 dient, mittels eines Schmelzschichtverfahrens (siehe insbesondere Figuren 4 und 6).

Dabei wird beim Herstellen des dritten Abschnitts 12c vor dem Aufbringen jeder weiteren Schicht das Substrat, d. h. eine darunterliegende Schicht des dritten Abschnitts 12c, ein Abschnitt der Stützstruktur 54 und/oder ein Abschnitt des Restzahnmodells 52, lokal mittels der fokussierbaren Wärmequelle 28 erwärmt, um eine Verbindung zwischen den Schichten zu verbessern.

Wie bereits erwähnt, wird der dritte Abschnitt 12c aus einem PEEK-Material hergestellt. Dabei wird das Schmelzschichtverfahren bei einer Verarbeitungstemperatur von mehr als 150° ausgeführt (siehe nochmals zweiter Betriebszustand in Figur 2).

Es wird bemerkt, dass die verschiedenen Bestandteile oder Inhalte des Verfahrens zum Herstellen der dentalen Prothese 12 vorstehend ohne Angabe von spezifischen Reihenfolgen erläutert wurden. Das liegt daran, dass mehrere unterschiedliche Reihenfolgen bei der Herstellung der dentalen Prothese 12 möglich sind.

Dabei ist es einerseits möglich, die dentale Prothese 12 in globalen, d.h. sich über mehrere Abschnitte 12a, 12b, 12c erstreckende, Schichten herzustellen. Das bedeutet, dass es nötig sein kann, in derselben herzustellenden Schicht, sowohl ein Material Jetting Verfahren als auch ein Schmelzschichtverfahren auszuführen. Dafür wird die herzustellende Prothese 12, d.h. die bereits gefertigten Abschnitte innerhalb des Bauraums 32 durch Antreiben der Bauplattform 34 bewegt.

Für den Fall, dass auch eines oder mehrere aus einem Restzahnmodell 52, einer Stützstruktur 54 und einer Trennschicht 56 hergestellt werden sollen, werden diese ebenfalls im Zuge der Fertigung der globalen Schichten hergestellt.

Alternativ ist es möglich, die dentale Prothese 12 abschnittsweise herzustellen. Das bedeutet, dass die einzelnen Abschnitte 12a, 12b, 12c der dentalen Prothese 12, sowie das möglicherweise vorhandene Restzahnmodell 52, die Stützstruktur 54 und/oder die Trennschicht 56 jeweils einzeln und nacheinander hergestellt werden.

Auch sind Mischformen der beiden genannten Alternativen möglich, d.h. es kann die dentale Prothese 12 in Schichten hergestellt werden, wobei die Schichten jedoch nicht zu jeder Zeit und/oder an jedem Ort der dentalen Prothese 12 gleichmäßig, sozusagen synchron, aufgebaut werden. Vielmehr erlaubt diese Mischform, in einem oder mehreren ausgewählten Bereichen mit dem Schichtaufbau weiter voranzuschreiten als in anderen. Auf diese Weise kann die Prothese 12 in besonders effizienter Weise gefertigt werden, da es so möglich wird, Verfahrbewegungen der Bauplattform 34 zwischen dem Material Jetting Modul 14 und dem Schmelzschichtmodul 20 zu reduzieren.

### Bezugszeichenliste

- 10: Vorrichtung zum Herstellen einer dentalen Prothese
- 12: dentale Prothese
- 12a: erster Abschnitt zur Nachbildung von Zahnfleisch
- 12b: zweiter Abschnitt zur Nachbildung mindestens eines Zahns
- 12c: dritter Abschnitt zur Befestigung der Prothese im Mund und/oder zur Verstärkung der Prothese
- 14: Material Jetting Modul
- 16: Druckeinheit
- 18: Belichtungseinheit
- 20: Schmelzschichtmodul
- 22: Extrusionsdüse
- 24: Filamentfördereinheit
- 26: Filament
- 28: lokal fokussierbare Wärmequelle
- 30: Gehäuse
- 32: Bauraum
- 34: Bauplattform
- 36: Antriebseinheit
- 38: Steuereinheit
- 40: Vorrichtung zur Datenverarbeitung
- 42: Speichereinheit
- 44: Recheneinheit
- 46: computerlesbares Medium
- 48: Computerprogramm
- 50: Mittel zur Ausführung des Verfahrens zum Erstellen eines Schichtaufbaus für eine dentale Prothese
- 52: Restzahnmodell
- 53: Restzahn
- 54: Stützstruktur
- 56: Trennschicht
- 58: Negativform

- A1: erster Schichtaufbau
- A2: zweiter Schichtaufbau
- A3: dritter Schichtaufbau
- A4: vierter Schichtaufbau
- A5: fünfter Schichtaufbau
- A6: sechster Schichtaufbau
- DA: Schichtaufbaudaten
- DG: Geometriedaten

## Patentansprüche

1. Verfahren zum Herstellen einer dentalen Prothese (12), wobei die Prothese (12) einen ersten Abschnitt (12a) zur Nachbildung von Zahnfleisch, einen zweiten Abschnitt (12b) zur Nachbildung mindestens eines Zahns sowie einen dritten Abschnitt (12c) zur Befestigung der Prothese (12) im Mund und/oder zur Verstärkung der Prothese (12) umfasst, wobei das Verfahren umfasst
- schichtweises Herstellen des ersten Abschnitts (12a) und/oder des zweiten Abschnitts (12b) mittels eines Material Jetting Verfahrens, und
- schichtweises Herstellen des dritten Abschnitts (12c) mittels eines Schmelzschichtverfahrens.

2. Verfahren nach Anspruch 1, ferner umfassend: Schichtweises Herstellen eines Restzahnmodells (52) mittels eines Material Jetting Verfahrens, wobei das Restzahnmodell (52) einen Abschnitt des Mundes nachbildet, auf dem die Prothese (12) sitzen soll.

3. Verfahren nach Anspruch 2, ferner umfassend: schichtweises Herstellen einer Trennschicht (56) mittels eines Material Jetting Verfahrens, wobei die Trennschicht (56) zwischen dem Restzahnmodell (52) und dem ersten Abschnitt (12a) und/oder dem zweiten Abschnitt (12b) liegt, oder
schichtweises Herstellen einer Trennschicht (56) mittels eines Material Jetting Verfahrens, wobei die Trennschicht (56) als zumindest abschnittsweise äußerste Schicht des Restzahnmodells (56) hergestellt wird und wobei der erste Abschnitt (12a) und/oder der zweite Abschnitt (12b) an der Trennschicht (56) anliegt.

4. Verfahren nach einem der vorhergehenden Ansprüche, ferner umfassend: schichtweises Herstellen einer Stützstruktur (54) für den ersten Abschnitt (12a), den zweiten Abschnitt (12b) und/oder den dritten Abschnitt (12c) mittels eines Material Jetting Verfahrens, insbesondere wobei die Stützstruktur (54) an das Restzahnmodell (52) angrenzt oder mit dem Restzahnmodell (52) eine bauliche Einheit bildet.

5. Verfahren nach einem der vorhergehenden Ansprüche, wobei das Ausführen des Schmelzschichtverfahrens ein lokales Erwärmen eines Substrats für eine im Schmelzschichtverfahren aufzubringende Materialschicht umfasst.

6. Vorrichtung (10) zum Herstellen einer dentalen Prothese (12), wobei die Prothese (12) einen ersten Abschnitt (12a) zur Nachbildung von Zahnfleisch, einen zweiten Abschnitt (12b) zur Nachbildung mindestens eines Zahns sowie einen dritten Abschnitt (12c) zur Befestigung der Prothese (12) im Mund und/oder zur Verstärkung der Prothese (12) umfasst, wobei die Vorrichtung (10) umfasst
- ein Material Jetting Modul (14), das dazu ausgebildet ist, den ersten Abschnitt (12a) und/oder den zweiten Abschnitt (12b) wenigstens teilweise mittels eines Material Jetting Verfahrens herzustellen,
- ein Schmelzschichtmodul (10), das dazu ausgebildet ist, den dritten Abschnitt (12c) wenigstens teilweise mittels eines Schmelzschichtverfahrens herzustellen, und
- eine Bauplattform (34), auf der die Prothese (12) mittels des Material Jetting Moduls (14) und/oder mittels des Schmelzschichtmoduls (20) schichtweise aufbaubar ist.

7. Vorrichtung (10) nach Anspruch 6, ferner umfassend eine lokal fokussierbare Wärmequelle (28) zum Erwärmen eines Substrats für eine im Schmelzschichtverfahren aufzubringende Materialschicht.

8. Vorrichtung (10) nach Anspruch 6 oder 7, ferner umfassend einen Rahmen oder ein Gehäuse (30), wobei das Material Jetting Modul (14) und das Schmelzschichtmodul (20) am Rahmen oder Gehäuse (30) fixiert sind und die Bauplattform (34) relativ zum Rahmen oder Gehäuse (30) beweglich gelagert ist.

9. Computer-implementiertes Verfahren zum Erstellen eines Schichtaufbaus für eine dentale Prothese (12), wobei die Prothese (12) einen ersten Abschnitt (12a) zur Nachbildung von Zahnfleisch, einen zweiten Abschnitt (12b) zur Nachbildung mindestens eines Zahns sowie einen dritten Abschnitt (12c) zur Befestigung der Prothese (12) im Mund und/oder zur Verstärkung der Prothese (12) umfasst, wobei das Verfahren umfasst
- Erhalten von Geometriedaten (DG), die wenigstens eine Außenhülle des ersten Abschnitts (12a), eine Außenhülle des zweiten Abschnitts (12b) und eine Außenhülle des dritten Abschnitts (12c) beschreiben,
- Ermitteln von Schichtaufbaudaten (DA), die einen ersten Schichtaufbau (A1) für den ersten Abschnitt (12a), einen zweiten Schichtaufbau (A2) für den zweiten Abschnitt (12b) und einen dritten Schichtaufbaus (A3) für den dritten Abschnitt (12b) beschreiben, wobei der erste Schichtaufbau (A1) und der zweite Schichtaufbau (A2) zur Herstellung mittels eines Material Jetting Verfahrens und der dritte Schichtaufbau (A3) zur Herstellung mittels eines Schmelzschichtverfahrens vorgesehen sind, und wobei die Schichtaufbaudaten (DA) basierend auf den Geometriedaten (DG) ermittelt werden,
- Bereitstellen der Schichtaufbaudaten (DA) an eine einzelne Vorrichtung (10) zum Herstellen einer dentalen Prothese (12).

10. Verfahren nach Anspruch 9, wobei die Geometriedaten (DG) zusätzlich wenigstens einen Abschnitt einer Außenhülle eines Restzahnmodells (52) beschreiben, und wobei das Ermitteln der Schichtaufbaudaten (DA) das Ermitteln eines vierten Schichtaufbaus (A4) für wenigstens einen Abschnitt des Restzahnmodells (52) umfasst.

11. Verfahren nach Anspruch 9 oder 10, ferner umfassend Ermitteln einer für die Herstellung der dentalen Prothese (12) notwendigen Stützstruktur (54), wobei das Ermitteln der Schichtaufbaudaten (DA) das Ermitteln eines fünften Schichtaufbaus (A5) für die Stützstruktur (54) umfasst.

12. Verfahren nach einem der Ansprüche 9 bis 11, ferner umfassend Ermitteln einer für die Herstellung der dentalen Prothese (12) notwendigen Trennschicht (56), wobei das Ermitteln der Schichtaufbaudaten (DA) das Ermitteln eines sechsten Schichtaufbaus (A6) für die Trennschicht (56) umfasst.

13. Vorrichtung (40) zur Datenverarbeitung, umfassend Mittel (50) zur Ausführung des Verfahrens nach einem der Ansprüche 9 bis 12.

14. Computerprogramm (48), umfassend Befehle, die bei der Ausführung des Computerprogramms (48) durch einen Computer diesen veranlassen, das Verfahren nach einem der Ansprüche 9 bis 12 auszuführen.

15. Computerlesbares Medium (46), umfassend Befehle, die bei der Ausführung durch einen Computer diesen veranlassen, das Verfahren nach einem der Ansprüche 9 bis 12 auszuführen.
